# EUROPÄISCHE PATENTSCHRIFT

(11) **EP 3 218 648 B1**
(45) Veröffentlichungstag und Bekanntmachung des Hinweises auf die Patenterteilung: **20.05.2020**
(21) Anmeldenummer: 15804690.4
(22) Anmeldetag: 11.11.2015
(51) Int. Cl.: F21S 8/04, F21V 15/01, F21V 8/00

(54) **LED-LEUCHTE MIT EINEM GEBOGENEN LICHTLEITER**
LED LUMINAIRE COMPRISING A BENT OPTICAL WAVEGUIDE
LAMPE À LED POURVUE D'UN GUIDE DE LUMIÈRE COUDÉ

(30) Priorität: 11.11.2014 DE 202014105394 U
(43) Veröffentlichungstag der Anmeldung: 20.09.2017
(73) Patentinhaber: Zumtobel Lighting GmbH, 6850 Dornbirn (AT)
(72) Erfinder: MACHATE, Andreas, 88239 Wangen im Allgäu (DE)
(74) Vertreter: Thun, Clemens
(86) Internationale Anmeldenummer: PCT/EP2015/076307
(87) Internationale Veröffentlichungsnummer: WO 2016/075190

(56) Entgegenhaltungen:
- WO-A1-2014/153578
- WO-A2-2009/136310
- CN-A- 103 775 849
- CN-U- 202 403 049
- CN-U- 202 927 537
- DE-U1-202012 104 953
- JP-A- 2001 176 315
- US-A1- 2010 315 811
- US-A1- 2012 169 235
- US-B1- 8 761 565

## Beschreibung

Die Erfindung betrifft eine LED-Leuchte mit einem Lichtleiter.

Aus dem Stand der Technik sind derartige Leuchten bekannt. Problematisch ist hierbei allerdings grundsätzlich, die Leuchte so zu gestalten, dass sie - bei unauffälligem Gehäuse - eine verhältnismäßig große Lichtabgabefläche aufweist.

Aus der US 8,761,565 B1 ist eine LED-Leuchte mit einem gebogenen Lichtleiter bekannt, wobei ein Betriebsgerät in den Lichtleiter eingreifend angeordnet ist. Aus der CN 202403049 U ist eine LED-Leuchte mit einem kreiszylinderartig geformten Lichtleiter bekannt. In dem durch die Zylinderform gebildeten Innenbereich ist ein Betriebsgerät angeordnet. Ähnliche LED-Leuchten zeigen auch die Schriften CN 103775849 A und CN 202927537 U.

Die US 2012/169235 A1 bezieht sich auf eine Lichtanordnung, die eine Lichtleiterplatte umfasst und eine Vielzahl von Lichtquellen, die auf der Lichtquellenleiterplatte angeordnet sind. Eine Vielzahl von Lichtleitern erstreckt sich dabei axial von und neben jeder Lichtquelle.

Die WO 2014/153578 A1 betrifft eine Leuchte mit einem Gehäuse, welches mit einer lichtdurchlässigen Abdeckung verschlossen ist. Das Gehäuse dient der Aufnahmen einer Lichtquelle in Form einer Vielzahl an Leuchtdioden, die auf zumindest einer Leiterplatte angeordnet sind.

Der Erfindung liegt die Aufgabe zugrunde, eine entsprechende verbesserte LED-Leuchte anzugeben. Insbesondere soll die Leuchte - bei unauffälligem Gehäuse - eine verhältnismäßig große Lichtabgabefläche aufweisen können.

Diese Aufgabe wird gemäß der Erfindung mit dem in dem unabhängigen Anspruch genannten Gegenstand gelöst. Besondere Ausführungsarten der Erfindung sind in den abhängigen Ansprüchen angegeben.

Gemäß der Erfindung ist eine Leuchte vorgesehen, die eine LED-Lichtquelle zur Erzeugung eines Lichts aufweist, einen Lichtleiter zum Leiten des Lichts, sowie ein weiteres Leuchtenbauteil. Dabei ist der Lichtleiter derart gebogen geformt, dass er einen konvexen Oberflächenbereich und einen konkaven Oberflächenbereich aufweist und dabei derart angeordnet, dass er mit seinem konkaven Oberflächenbereich das weitere Leuchtenbauteil zumindest teilweise umgibt.

Durch diese Gestaltung lässt sich das weitere Leuchtenbauteil so anordnen, dass es eine Lichtabgabe der Leuchte besonders wenig behindert. Auf diese Weise lässt sich eine verhältnismäßig besonders große Licht abgebende Fläche der Leuchte erzielen.

Die Erfindung ist dadurch gekennzeichnet, dass eine transparente Abdeckung derart geformt und angeordnet ist, dass sie den konvexen Oberflächenbereich des Lichtleiters zumindest teilweise umgibt und eine optisch diffus wirkende Folie zwischen dem konvexen Oberflächenbereich des Lichtleiters und der transparenten Abdeckung angeordnet ist. Dabei ist die Abdeckung klar gestaltet und bildet eine Lichtabgabefläche der Leuchte. Die Erfindung ist dadurch gekennzeichnet, dass die Abdeckung über eine Rastverbindung an einem Trägerelement gehalten angeordnet ist, wobei die Abdeckung an ihren beiden oberen Endbereichen jeweils einen Rasthaken aufweist, der zur Bildung der Rastverbindung das Trägerelement rastend dauerhaft umgreift , derart dass sich die Lichtabgabefläche bis an die Obergrenze der Leuchte erstreckt.

Hierdurch ergeben sich folgende Vorteile:
Erzielen einer besonders hochwertigen Qualität des Lichts das die Leuchte verlässt.
Besonders homogen erscheinende Lichtabgabe der Leuchte.

Besonders vorteilhafte Montage der Leuchte.

Vorzugsweise ist die Leuchte derart gestaltet, dass das Licht über einen weiteren Oberflächenbereich des Lichtleiters, der den konvexen Oberflächenbereich mit dem konkaven Oberflächenbereich verbindend gebildet ist, in den Lichtleiter eintritt. Hierdurch lässt sich erzielen, dass besonders viel Licht geeignet in den Lichtleiter eintritt. Somit ist ein guter Wirkungsgrad der Leuchte unterstützt.

Vorzugsweise ist das weitere Leuchtenbauteil ein Betriebsgerät zur Stromversorgung der LED-Lichtquelle. Das Betriebsgerät ist ein vergleichsweise großes Leuchtenbauteil, das als solches für einen Betrieb der LED-Lichtquelle erforderlich ist. Daher ist es besonders vorteilhaft, wenn das Betriebsgerät entsprechend von dem Lichtleiter umgeben ist.

Vorzugsweise ist der Lichtleiter profilartig gestaltet, so dass er sich entlang einer Längsachse erstreckt, wobei er - in einem Querschnitt normal zu der Längsachse betrachtet - eine U-Form aufweist und mit den entsprechenden beiden U-Schenkeln das weitere Leuchtenbauteil zumindest teilweise, vorzugsweise vollständig umgibt. Auf diese Weise lässt sich die Leuchte bei kleiner Querschnittfläche besonders geeignet als längliche Leuchte gestalten, beispielsweise zur Bildung einer Lichtleiste.

Vorzugsweise ist der Lichtleiter derart gestaltet, dass das Licht zumindest teilweise über den konvexen Oberflächenbereich aus dem Lichtleiter austritt. Hierdurch lässt sich eine Licht abgebende Fläche erzielen, die im Vergleich zu dem weiteren Leuchtenbauteil besonders groß ist.

Vorzugsweise weist der Lichtleiter auf seinem konvexen Oberflächenbereich und/oder auf seinem konkaven Oberflächenbereich Strukturen, beispielsweise in Form von Gravuren auf, die dazu ausgestaltet sind, das Licht zumindest teilweise über den konvexen Oberflächenbereich aus dem Lichtleiter austreten zu lassen. Hierdurch lässt sich eine besonders geeignete Lichtabgabe über den Lichtleiter erzielen. Dabei sind weiterhin vorzugsweise die Strukturen derart ausgebildet, dass das über den konvexen Oberflächenbereich austretende Licht gleichmäßig abgegeben wird. Hierdurch lässt sich eine besonders homogene Lichtabgabe bewirken.

Vorzugsweise weist die Leuchte außerdem ein Reflektorelement, insbesondere in Form einer reflektierenden Folie auf, das auf dem konkaven Oberflächenbereich des Lichtleiters angeordnet ist. Hierdurch lässt sich der Wirkungsgrad der Leuchte steigern.

Besonders eignet sich die Leuchte in Form einer Anbauleuchte oder abgehängten Leuchte.

Die Erfindung wird im Folgenden anhand von Ausführungsbeispielen und mit Bezug auf die Zeichnungen näher erläutert. Es zeigen:
- Fig. 1: eine Querschnitt-Skizze eines Ausführungsbeispiels einer erfindungsgemäßen Leuchte,
- Fig. 2: eine perspektivische Skizze zu der Leuchte,
- Fig. 3: eine Querschnitt-Skizze eines weiteren Ausführungsbeispiels und
- Fig. 4: eine Querschnitt-Skizze eines noch weiteren Ausführungsbeispiels.

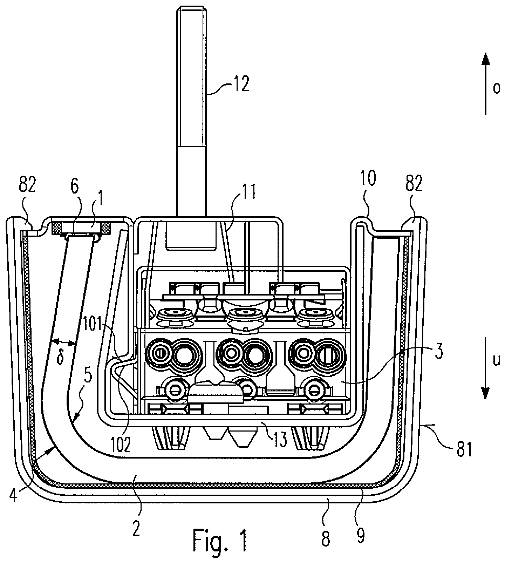

Fig. 1 zeigt eine Querschnitt-Skizze einer erfindungsgemäßen Leuchte, hier in Form einer Deckenleuchte, insbesondere einer Deckenanbauleuchte. In Fig. 1 ist mit einem Pfeil o die senkrecht nach oben weisende Richtung bezeichnet, die sich bei einer, für einen Betrieb der Leuchte vorgesehenen Ausrichtung ergibt. Der weitere Pfeil u weist in diesem Sinne dementsprechend senkrecht nach unten. Im Folgenden wird von dieser Orientierung der Leuchte ausgegangen.

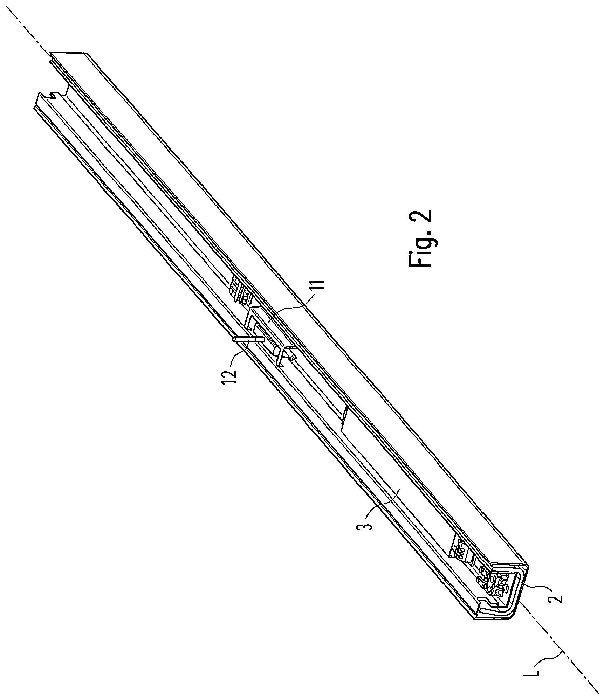

In Fig. 2 ist eine perspektivische Skizze zu der Leuchte von schräg oben gezeigt.

Die Leuchte weist eine LED-Lichtquelle 1 zur Erzeugung eines Lichts auf, sowie einen Lichtleiter 2 zum Leiten des Lichts. Außerdem weist die Leuchte ein weiteres Leuchtenbauteil 3 auf, im hier gezeigten Beispiel ein Betriebsgerät, insbesondere in Form eines Konverters zur Stromversorgung der LED-Lichtquelle 1. Der Lichtleiter 2 ist derart gebogen geformt, dass er einen konvexen Oberflächenbereich 4 und einen konkaven Oberflächenbereich 5 aufweist; er ist dabei derart angeordnet, dass er mit seinem konkaven Oberflächenbereich 5 das weitere Leuchtenbauteil 3 zumindest teilweise, vorzugsweise vollständig umgibt.

Durch den Lichtleiter 2 lässt sich sozusagen ein Geräteraum der Leuchte bilden. Beispielsweise ist der Geräteraum derart gestaltet, dass in ihm Anschlüsse, Betriebsgeräte, Durchgangsverdrahtungen usw. angeordnet werden können.

Die Gestaltung beim hier gezeigten Beispiel ist weiterhin derart, dass das Licht über einen weiteren Oberflächenbereich 6 des Lichtleiters 2, der den konvexen Oberflächenbereich 4 mit dem konkaven Oberflächenbereich 5 verbindend gebildet ist, in den Lichtleiter 2 eintritt. Hierdurch lässt sich das von der LED-Lichtquelle 1 abgestrahlte Licht besonders geeignet in den Lichtleiter 2 "einkoppeln". Insbesondere kann die LED-Lichtquelle 1 eine längliche Platine mit LEDs aufweisen.

Wie aus Fig. 2 hervorgeht, ist im gezeigten Beispiel der Lichtleiter 2 profilartig gestaltet, so dass er sich profilartig entlang einer Längsachse L erstreckt, wobei er - in einem Querschnitt normal zu der Längsachse L betrachtet - eine U-Form aufweist und mit den entsprechenden beiden U-Schenkeln das weitere Leuchtenbauteil 3 zumindest teilweise, vorzugsweise vollständig umgibt. Die Platine der LED-Lichtquelle 1 ist dabei vorzugsweise parallel zur Längsachse L orientiert angeordnet. Die LED-Lichtquelle 1 ist in diesem Fall sozusagen eine lineare Lichtquelle.

Vorzugsweise ist das weitere Leuchtenbauteil 3 von einem Blechteil 13 in dem Geräteraum gehalten angeordnet.

Die Leuchte lässt sich mit einer besonders kleinen Querschnittfläche gestalten, wenn der Lichtleiter 2 das weitere Leuchtenbauteil bzw. das Betriebsgerät 3 eng umgibt. Im gezeigten Beispiel ist die Gestaltung hierzu derart, dass - in dem Querschnitt normal zur Längsachse L betrachtet - der, durch die U-Form festgelegte Innenbereich überwiegend durch das Betriebsgerät 3 ausgefüllt ist.

Wenn die U-Schenkel - wie in Fig. 1 exemplarisch gezeigt - das Betriebsgerät 3 vollständig umgeben, also sich nach oben hin weiter erstrecken als das Betriebsgerät 3, lässt sich vorteilhaft eine Licht abgebende Fläche der Leuchte erzielen, die sich nicht nur unterhalb des Betriebsgeräts 3 erstreckt, sondern auch zu beiden Seiten des Betriebsgeräts 3, und zwar über die gesamte Höhe des Betriebsgeräts 3. Auf diese Weise lässt sich erzielen, dass bei Betrachtung der eingeschalteten Leuchte keine oder praktisch keine nicht leuchtenden Flächen der Leuchte zu erkennen sind.

Vorzugsweise ist hierzu der Lichtleiter 2 derart gestaltet, dass das Licht zumindest teilweise, insbesondere überwiegend über den konvexen Oberflächenbereich 4 aus dem Lichtleiter 2 austritt.

Der Lichtleiter 2 ist vorzugsweise mit einem Krümmungsradius gestaltet, der so gewählt ist, dass das über den weiteren Oberflächenbereich 6 eingetretene Licht - in dem Querschnitt normal zur Längsachse L betrachtet - längs des Lichtleiters 2 auf die andere Seite des Betriebsgeräts 3 weitergeleitet wird, ohne hierbei aufgrund eines zu kleinen Krümmungsradius den Lichtleiter 2 durch Brechung zu verlassen.

Eine besonders geeignete Auskopplung des Lichts aus dem Lichtleiter 2 lässt sich erzielen, wenn der Lichtleiter 2 auf seinem konvexen Oberflächenbereich 4 und/oder auf seinem konkaven Oberflächenbereich 5 Strukturen, beispielsweise in Form von Gravuren aufweist, die dazu ausgestaltet sind, das Licht zumindest teilweise über den konvexen Oberflächenbereich 4 aus dem Lichtleiter 2 austreten zu lassen. Dabei sind weiterhin vorzugsweise diese Strukturen derart ausgebildet, dass das über den konvexen Oberflächenbereich 4 austretende Licht gleichmäßig abgegeben wird. Hierdurch lässt sich eine besonders gleichmäßige Lichtabgabe der Leuchte erzielen.

Beispielsweise ist der Lichtleiter 2 als Spritzgussteil gestaltet. Dabei können die Gravuren im Rahmen des Spritzgießens erstellt sein oder nachträglich aufgebracht sein. Alternativ kann der Lichtleiter 2 als extrudiertes Teil gestaltet sein.

Wenn die Gravuren auf dem konvexen Oberflächenbereich 4 ausgebildet sind, ist dies besonders vorteilhaft mit Bezug auf die Effizienz der Lichtabgabe, wenn sie auf dem konkaven Oberflächenbereich 5 ausgebildet sind, besonders vorteilhaft mit Bezug auf die Homogenität der Lichtabgabe.

Alternativ oder ergänzend kann beispielsweise vorgesehen sein, dass der Lichtleiter 2 aus einem Material besteht, das eine räumlich inhomogene Dichte aufweist, derart, dass hierdurch eine entsprechende Auskopplung des Lichts erzielt wird. Hierzu eignet sich beispielsweise entsprechendes Plexiglas.

Um einen geeignet hohen Wirkungsgrad bei der Lichtabgabe zu erzielen, weist die Leuchte vorzugsweise außerdem ein Reflektorelement, insbesondere in Form einer reflektierenden Folie oder reflektierenden Schicht auf, das auf dem konkaven Oberflächenbereich 5 des Lichtleiters 2 angeordnet ist. Bei der reflektierenden Folie bzw. Schicht kann es sich beispielsweise um ein weißes, geschäumtes MCPET (microcellular foamed polyethylene terephthalate sheet) handeln oder um eine hochglänzende oder diffuse Reflektorfolie. Auch ein vorlackiertes Blechteil ist hierbei als Reflektorelement möglich. Durch das Reflektorelement lassen sich Licht-Verluste vermeiden bzw. reduzieren. Insbesondere lässt sich auf diese Weise verhindern, das Licht in den Geräteraum bzw. den Innenbereich eindringt und so nicht mehr zur regulären Lichtabgabe der Leuchte zur Verfügung steht. Bei Betrachtung von außen ist der Geräteraum bzw. der entsprechende Leuchten-Innenbereich dabei nicht sichtbar. Weiterhin vorteilhaft mit Bezug auf eine gleichmäßige Lichtabgabe weist die Leuchte außerdem eine transparente Abdeckung 8 auf, die derart geformt und angeordnet ist, dass sie den konvexen Oberflächenbereich 4 des Lichtleiters 2 zumindest teilweise, insbesondere überwiegend umgibt. Insbesondere kann durch die transparente Abdeckung 8 eine Lichtabgabefläche 81 der Leuchte gebildet sein, die sich - in dem Querschnitt normal zu der Längsachse L betrachtet - das Betriebsgerät 3 umgreifend erstreckt. Auf diese Weise lässt sich durch die Abdeckung 8 sozusagen ein "Gehäuse" der Leuchte bilden, das die Lichtaustrittsfläche 81 bildet.

Dabei ist die Gestaltung derart, dass das über den konvexen Oberflächenbereich 4 des Lichtleiters 2 austretende Licht zumindest teilweise die transparente Abdeckung 8 durchsetzt und über die Lichtabgabefläche 81 in einen Außenraum der Leuchte abgegeben wird.

Beispielsweise ist die Abdeckung 8 als Spritzgussteil gestaltet. Alternativ kann die Abdeckung 8 beispielsweise als extrudiertes Teil gestaltet sein.
Vorzugsweise ist die Abdeckung 8 - in einem Querschnitt normal zu der Längsachse L betrachtet - im Wesentlichen U-förmig, wobei sie sich sehr nahe an den Lichtleiter 2 hin erstreckt. Beispielsweise kann der Lichtleiter 2 quasi "formschlüssig" in die Abdeckung 8 eingreifend angeordnet sein. Im gezeigten Beispiel ist die Gestaltung derart, dass die Abstände zwischen allen Stellen des konvexen Oberflächenbereichs 4 des Lichtleiters 2 einerseits und der Abdeckung 8 andererseits kleiner sind als das Doppelte einer Dicke δ des Lichtleiters an der jeweils betreffenden Stelle.
Zwischen dem konvexen Oberflächenbereich 4 des Lichtleiters 2 und der transparenten Abdeckung 8 - ist noch eine optisch diffus wirkende Folie 9 angeordnet. Hierdurch lässt sich erzielen, dass die Lichtabgabefläche 81 bei eingeschalteter Leuchte besonders homogen erscheint. Vorzugsweise ist die Folie 9 derart gestaltet, dass sie das Licht richtungsneutral aufstreut.

Die Abdeckung 8 ist klar gestaltet. Wenn die Abdeckung 8 klar ist, lässt sich in Verbindung mit der diffus wirkenden Folie 9 ein Tiefeneffekt erzielen, wodurch ein besonders hochwertiges äußeres Erscheinungsbild der Leuchte ermöglicht ist.

Es kann vorgesehen sein, dass der Lichtleiter 2 zumindest teilweise die Folie 9 kontaktiert. Dies ist allerdings nicht zwingend erforderlich, es kann hier auch ein gewisser Abstand vorgesehen sein.
Beim gezeigten Beispiel weist die Leuchte weiterhin ein Trägerelement 10 auf, wobei die Abdeckung 8 an dem Trägerelement 10 gehalten angeordnet ist; dabei ist die Abdeckung 8 über eine Rastverbindung an dem Trägerelement 10 angeordnet gehalten, beispielsweise durch Stahlfedern oder Schnapphaken oder ähnlichem. Vorzugsweise ist das Blechteil 13, an dem das Betriebsgerät 3 gehalten ist, mit dem Trägerelement 10 verbunden.
Beispielsweise kann es sich bei dem Trägerelement 10 ebenfalls um ein Blechteil handeln, also um ein Trägerblech. Beim dem in Fig. 1 gezeigten Beispiel weist die Abdeckung 8 an ihren beiden oberen Endbereichen jeweils einen Rasthaken 82 auf, der zur Bildung der Rastverbindung das Trägerblech 10 rastend umgreift. Durch diese Gestaltung lässt sich erzielen, dass sich die Lichtabgabefläche 81 bis quasi an die Obergrenze der Leuchte erstreckt, hier also insbesondere kein Leuchtengehäuse erkennbar ist. Beispielsweise kann hier die Bildung einer Schattenfuge zwischen der Decke und der Abdeckung 8 bzw. der Lichtabgabefläche 81 vorgesehen sein.

Wenn die Gestaltung so ist, dass kein Gehäuse erkennbar ist, lässt sich die Leuchte mit einem hochwertigen Eindruck gestalten, ohne dass hierfür entsprechende beschichtete Materialien erforderlich wären. Das Trägerelement 10 kann so herstellungstechnisch vorteilhaft beispielsweise als einfaches Blechteil bzw. Blechprofil gestaltet sein. Das Trägerelement 10 kann weiterhin herstellungstechnisch vorteilhaft als extrudiertes Teil gebildet sein, beispielsweise aus Aluminium oder Kunststoff. Es kann auch als Spritzgussteil gebildet sein.

Beim gezeigten Beispiel ist zur Halterung der Leuchte an der Decke ein Stahlfederelement 11 vorgesehen, das zur Montage der Leuchte mittels einer Schraube 12 an der Decke befestigt wird. Dabei ist die Gestaltung weiterhin derart, dass sich das Trägerelement 10 über eine weitere Rastverbindung mit dem Stahlfederelement 11 verbinden lässt, so dass das Trägerelement 10 hierdurch an dem Stahlfederelement 11 gehalten ist. Im gezeigten Beispiel weist das Stahlfederelement 11 hierzu eine Rastnase 102 auf, auf der das Trägerelement 10 zur Bildung der weiteren Rastverbindung mit einer Schulterfläche 101 aufliegt. Bei dieser Gestaltung lässt sich vermeiden, dass bei Betrachtung der montierten Leuchte entsprechende Befestigungselemente sichtbar sind. Selbstverständlich kann außerdem wenigstens ein weiteres analoges Stahlfederelement vorgesehen sein, das zur entsprechenden Halterung der Leuchte an einer mit Bezug auf die Längsachse L anderen Stelle dient.

Zur Montage der Leuchte kann hierbei insbesondere vorgesehen sein, dass in einem ersten Schritt das Stahlfederelement 11 mit der Schraube 12 an der Decke befestigt wird, anschließend die Leuchte mit einem Abhänge-Element, beispielsweise einer Spiralfeder oder einer Lasche an das Stahlfederelement 11 gehängt wird, so dass in einem weiteren Schritt externe elektrische Anschlusselemente, beispielsweise aus der Decke kommend mit entsprechenden Anschlusselementen der Leuchte verbunden werden können. Nach Herstellung der Anschlussverbindung wird dann die Leuchte von unten gegen das Stahlfederelement 11 gedrückt, bis die weitere Rastverbindung hergestellt ist und so die Leuchte an dem Stahlfederelement 11 gehalten ist.

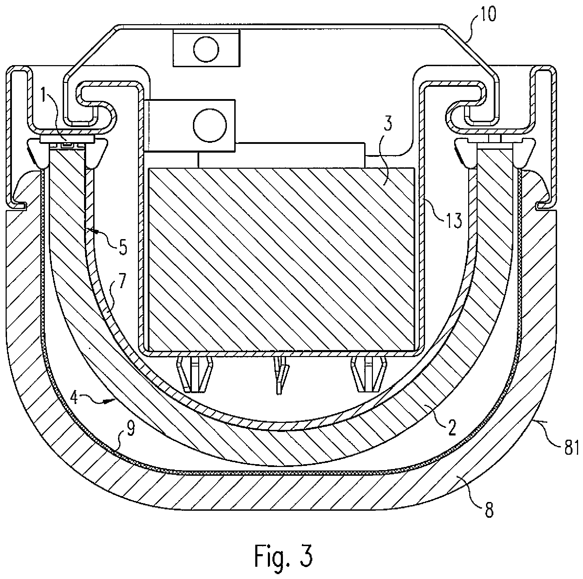

In Fig. 3 ist eine weitere Ausführungsform der Leuchte skizziert. Im Folgenden wird lediglich auf Unterschiede zum oben beschriebenen Ausführungsbeispiel eingegangen. Die Bezugszeichen sind analog gebraucht.

In Fig. 3 ist das Reflektorelement bzw. die reflektierende Folie bzw. Schicht auf mit dem konkaven Oberflächenbereich 5 des Lichtleiters 2 mit dem Bezugszeichen 7 bezeichnet.

Bei dieser Ausführung ist eine alternative Halterung der Leuchte an der Decke vorgesehen. Dazu ist das Trägerblech 10 so ausgeführt, dass es unmittelbar an der Decke angeschraubt werden kann. Dies bietet den Vorteil, dass der restliche Teil der Leuchte, der zur Montage mittels verrastenden Federverbindungen mit dem Trägerblech 10 verbunden wird, ein prinzipiell geringeres Gewicht aufweist als im ersten Beispiel. Vor dem Verbinden der restlichen Leuchte mit dem Trägerelement 10 kann die elektrische Verbindung hergestellt werden, zum Beispiel mittels einer Stecker-Buchse-Verbindung. Hierbei kann der Stecker an dem einem der beiden Bauteile und die Buchse an dem anderen Bauteil fest angeordnet sein. Es kann auch ein entsprechender Sucherstift verwendet werden oder ein fliegender Stecker.

Eine weitere Möglichkeit besteht darin, die Leuchte so zu gestalten, dass sie wie folgt montiert werden kann: In einem ersten Schritt wird die Leuchte ohne die Abdeckung 8 an die Decke geschraubt bzw. über eine Rastverbindung mit einem entsprechenden Stahlfederelement verbunden. Die Anschlüsse sind in diesem Zustand zugänglich, so dass in einem weiteren Schritt die elektrische Verbindung hergestellt wird. Anschließend wird die Abdeckung 8 mit der restlichen Leuchte verbunden, beispielsweise über die Rastverbindung. Hierbei ist es vorteilhaft, wenn die Platine der LED-Lichtquelle 1 eine LED-Abdeckung in Form einer "Voroptik" aufweist, wobei die Platine mit der Voroptik gegenüber dem Trägerelement 10 fest angeordnet ist. Hierdurch lässt sich die Gefahr vermindern, dass ein Nutzer der Leuchte durch Berührung der Platine einen Stromschlag erhält und/oder die LED-Lichtquelle 1 beschädigt.

Zum Zusammenhalt der Leuchte können auch stirnseitige Endabdeckungen (in den Figuren nicht gezeigt) vorgesehen sein.

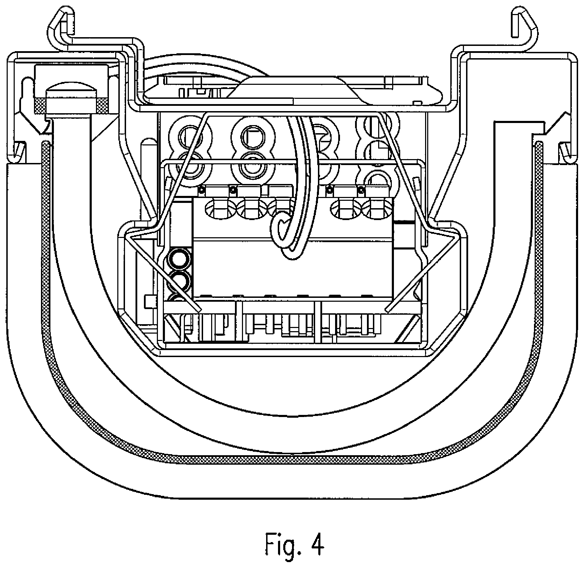

In Fig. 4 ist eine weitere mögliche Ausgestaltung der Leuchte skizziert.

In den oben beschriebenen Beispielen ist vorgesehen, dass - im Querschnitt normal zur Längsachse L betrachtet - das Licht der LED-Lichtquelle 1 auf lediglich einer Seite des Betriebsgeräts 3 erzeugt wird und in den Lichtleiter 2 eintritt. Alternativ kann vorgesehen sein, dass die LED-Lichtquelle zweiteilig ist, so dass auch auf der entsprechenden anderen Seite des Betriebsgeräts 3 in analoger Weise Licht in den Lichtleiter 2 eingekoppelt wird.

Auch ist eine stirnseitige Einkopplung des Lichts möglich, beispielsweise durch eine LED-Lichtquelle, die eine entsprechende U-förmige Platine bzw. LED-Anordnung aufweist.

Mit der Leuchte lässt sich ein Lichtabgabebereich erzielen, der sich praktisch über die gesamte Länge der Leuchte hinweg erstreckt (ausgenommen die stirnseitigen Endbereiche) und über den Licht homogen abgegeben wird. Bei Betrachtung der montierten Leuchte ist ein Gehäuse nicht oder allenfalls nur marginal sichtbar.

Zur Bildung der LED-Lichtquelle 1 wird vergleichsweise wenig Platinen-Fläche benötigt.

Herstellungstechnisch vorteilhaft können Kunststoff und Stahlblech als Materialien verwendet werden.

Die Leuchte eignet sich beispielsweise als Badleuchte oberhalb eines Spiegels. Als Anbauleuchte kann dabei auch eine anderweitige Orientierung vorgesehen sein, so dass die Leuchte nicht, wie oben beschrieben an einer horizontalen Deckenwand befestigt wird, sondern an einer beispielsweise vertikalen Wandfläche. Sie eignet sich also, wie erwähnt als Anbauleuchte, allerdings ist beispielsweise auch eine abgehängte Version möglich.

Die Leuchte eignet sich dazu, mit einer weiteren, analogen Leuchte zusammen verwendet zu werden, wobei die beiden Leuchten in Richtung der Längsachse L hintereinander angeordnet sind, so dass sich durch die Lichtabgabe der der beiden Leuchten eine besonders lange Lichtlinie bzw. Lichtleiste ergibt. Die Abdeckung 8 ist in diesem Fall vorzugsweise derart ausgeführt, dass sie bündig mit dem entsprechenden Endbereich der weiteren Leuchte abschließt.

Hierbei ist es weiterhin vorteilhaft, eine längliche Tragschiene als Trägerelement für die Leuchten vorzusehen, wobei die Tragschiene vorzugsweise Stromversorgungsleitungen für die Leuchten aufweist. Dementsprechend weist die Leuchte vorzugsweise entsprechende Elemente zum Kontaktieren dieser Stromversorgungsleitungen auf.

Weiterhin alternativ zu der oben beschriebenen Gestaltung lässt sich die Leuchte auch mit einem leuchtenden Stirnbereich gestalten, und zwar in rechteckiger Anordnung. Hierzu kann der Lichtleiter 2 als Schale gestaltet sein, die das Licht in die Stirnbereiche leitet. Die Leuchte kann auch rotationssymmetrisch gestaltet sein oder mit einer beliebigen Form, beispielsweise oval, rund, stabförmig, kugelförmig.

## Patentansprüche

1. Leuchte, aufweisend
- eine LED-Lichtquelle (1) zur Erzeugung eines Lichts,
- einen Lichtleiter (2) zum Leiten des Lichts,
- ein weiteres Leuchtenbauteil (3),
wobei der Lichtleiter (2) derart gebogen geformt ist, dass er einen konvexen Oberflächenbereich (4) und einen konkaven Oberflächenbereich (5) aufweist und dabei derart angeordnet ist, dass er mit seinem konkaven Oberflächenbereich (5) das weitere Leuchtenbauteil (3) zumindest teilweise umgibt,
wobei die Leuchte weiterhin aufweist:
- eine transparente Abdeckung (8), die derart geformt und angeordnet ist, dass sie den konvexen Oberflächenbereich (4) des Lichtleiters (2) zumindest teilweise umgibt,
- eine optisch diffus wirkende Folie (9), die zwischen dem konvexen Oberflächenbereich (4) des Lichtleiters (2) und der transparenten Abdeckung (8) angeordnet ist, und
ein Trägerelement (10),
wobei die Abdeckung (8) klar gestaltet ist und eine Lichtabgabefläche (81) der Leuchte bildet,
**dadurch gekennzeichnet,**
**dass** die Abdeckung (8) über eine Rastverbindung an dem Trägerelement (10) gehalten angeordnet ist, wobei die Abdeckung (8) an ihren beiden oberen Endbereichen jeweils einen Rasthaken (82) aufweist, der zur Bildung der Rastverbindung das Trägerelement (10) rastend derart umgreift, dass sich die Lichtabgabefläche (81) bis an die Obergrenze der Leuchte erstreckt.

2. Leuchte nach Anspruch 1,
die derart gestaltet ist, dass das Licht über einen weiteren Oberflächenbereich (6) des Lichtleiters (2), der den konvexen Oberflächenbereich (4) mit dem konkaven Oberflächenbereich (5) verbindend gebildet ist, in den Lichtleiter (2) eintritt.

3. Leuchte nach einem der vorhergehenden Ansprüche, bei der das weitere Leuchtenbauteil (3) ein Betriebsgerät zur Stromversorgung der LED-Lichtquelle (1) ist.

4. Leuchte nach einem der vorhergehenden Ansprüche,
bei der der Lichtleiter (2) profilartig gestaltet ist, so dass er sich entlang einer Längsachse (L) erstreckt, wobei er - in einem Querschnitt normal zu der Längsachse (L) betrachtet - eine U-Form aufweist und mit den entsprechenden beiden U-Schenkeln das weitere Leuchtenbauteil (3) zumindest teilweise, vorzugsweise vollständig umgibt.

5. Leuchte nach einem der vorhergehenden Ansprüche,
bei der der Lichtleiter (2) derart gestaltet ist, dass das Licht zumindest teilweise über den konvexen Oberflächenbereich (4) aus dem Lichtleiter (2) austritt.

6. Leuchte nach einem der vorhergehenden Ansprüche,
bei der der Lichtleiter (2) auf seinem konvexen Oberflächenbereich (4) und/oder auf seinem konkaven Oberflächenbereich (5) Strukturen, beispielsweise in Form von Gravuren aufweist, die dazu ausgestaltet sind, das Licht zumindest teilweise über den konvexen Oberflächenbereich (4) aus dem Lichtleiter (2) austreten zu lassen.

7. Leuchte nach Anspruch 6,
bei der die Strukturen derart ausgebildet sind, dass das über den konvexen Oberflächenbereich (4) austretende Licht gleichmäßig abgegeben wird.

8. Leuchte nach einem der vorhergehenden Ansprüche,
weiterhin aufweisend
- ein Reflektorelement, insbesondere in Form einer reflektierenden Folie (7), das auf dem konkaven Oberflächenbereich (5) des Lichtleiters (2) angeordnet ist.

9. Leuchte nach einem der vorhergehenden Ansprüche in Form einer Anbauleuchte oder abgehängten Leuchte.

## Claims

1. Lamp comprising
- an LED light source (1) for generating a light,
- a light guide (2) for guiding the light,
- an additional lamp component (3),
wherein the light guide (2) is curved in such a way that it has a convex surface area (4) and a concave surface area (5) and is arranged in such a way that with its concave surface area (5), it at least partially surrounds the additional lamp component (3),
wherein the lamp furthermore has:
- a transparent cover (8) which is shaped and arranged in such a way that it at least partially surrounds the convex surface area (4) of the light guide (2),
- an optically diffusing lobe (9) arranged between the convex surface area (4) of the light guide (2) and the transparent cover (8), and
a carrier element (10),
wherein the cover (8) is designed to be clear and forms a light emission surface (81) of the lamp,
**characterized in that**
the cover (8) is arranged to be held on the carrier element (10) via a latching connection, wherein the cover (8) comprises, on its two upper end regions, one latching hook (82) each, which engages the carrier element (10) in a latching manner to form the latching connection in such a way that the light emission surface (81) extends to the upper edge of the lamp.

2. Lamp according to claim 1,
which is designed in such a way that the light enters the light guide (2) via a further surface area (6) of the light guide (2), which is formed to connect the convex surface area (4) to the concave surface area (5).

3. Lamp according to one of the preceding claims, in which the additional lamp component (3) is an operating device for supplying power to the LED light source (1).

4. Lamp according to one of the preceding claims,
in which the light guide (2) is designed to be profile-like so that it extends along a longitudinal axis (L), wherein, when viewed in a cross-section normal to the longitudinal axis (L), it has a U shape and, with the corresponding two U legs surrounds the additional lamp component (3) at least partially, preferably completely.

5. Lamp according to one of the preceding claims,
in which the light guide (2) is designed in such a way that the light exits the light guide (2) at least partially via the convex surface area (4).

6. Lamp according to one of the preceding claims,
in which on its convex surface area (4) and/or its concave surface area (5), the light guide (2) has structures, for example in the form of engravings, which are designed to allow the light to exit the light guide (2) at least partially via the convex surface area (4).

7. Lamp according to claim 6,
in which the structures are designed in such a way that the light exiting via the convex surface area (4) is emitted evenly.

8. Lamp according to one of the preceding claims, furthermore comprising
- a reflector element, in particular in the form of a reflective film (7), which is arranged on the concave surface area (5) of the light guide (2).

9. Lamp according to one of the preceding claims in the form of a surface-mounted lamp or suspended lamp.

## Revendications

1. Luminaire, comprenant :
- une source de lumière à LED (1) destinée à générer de la lumière,
- un guide de lumière (2) destiné à guider la lumière, et
- un autre composant de luminaire (3),
le guide de lumière (2) étant de forme arquée, de façon à présenter une zone de surface convexe (4) et une zone de surface concave (5) et étant ainsi disposé de façon à entourer au moins partiellement, par sa zone de surface concave (5), l'autre composant de luminaire (3),
ledit luminaire comprenant en outre :
- un capot transparent (8) formé et disposé de façon à entourer au moins partiellement la zone de surface convexe (4) du guide de lumière (2),
- une feuille (9) à action de diffusion optique disposée entre la zone de surface convexe (4) du guide de lumière (2) et le capot transparent (8), et
un élément de support (10) ;
ledit capot (8) étant conçu translucide et formant une surface de sortie de lumière (81) du luminaire,
**caractérisé en ce que**
le capot (8) est disposé en étant maintenu par liaison d'encliquetage sur l'élément de support (10), ledit capot (8) présentant un crochet d'encliquetage (82) sur chacune de ses deux zones d'extrémité supérieure, lequel, pour former ladite liaison d'encliquetage, vient s'encliqueter de part et d'autre de l'élément de support (10) de telle manière que la surface de sortie de lumière (81) parvient jusqu'à la limite supérieure du luminaire.

2. Luminaire selon la revendication 1,
conçu de telle manière que la lumière entre dans le guide de lumière (2) par le biais d'une autre zone de surface (6) du guide de lumière (2) qui est formée de manière à relier la zone de surface convexe (4) à la zone de surface concave (5).

3. Luminaire selon l'une quelconque des revendications précédentes, dans lequel l'autre composant de luminaire (3) est une unité de contrôle permettant l'alimentation électrique de la source de lumière à LED (1).

4. Luminaire selon l'une quelconque des revendications précédentes,
dans lequel le guide de lumière (2) est conçu sous la forme d'un profilé s'étendant le long d'un axe longitudinal (L) et qui, vu en coupe transversale normale à l'axe longitudinal (L), présente une forme de U qui entoure au moins partiellement, et de préférence complètement, l'autre composant de luminaire (3) par ses deux branches de U ainsi constituées.

5. Luminaire selon l'une quelconque des revendications précédentes,
dans lequel le guide de lumière (2) est conçu de sorte que la lumière sorte du guide de lumière (2) au moins partiellement par la zone de surface convexe (4).

6. Luminaire selon l'une quelconque des revendications précédentes,
dans lequel le guide de lumière (2) présente, sur sa zone de surface convexe (4) et/ou sur sa zone de surface concave (5), des structures, par exemple sous la forme de gravures, qui sont conçues pour laisser sortir la lumière du guide de lumière (2) au moins partiellement par la zone de surface convexe (4).

7. Luminaire selon la revendication 6,
dans lequel lesdites structures sont conçues de manière que la lumière sortant par la zone de surface convexe (4) soit émise de manière uniforme.

8. Luminaire selon l'une quelconque des revendications précédentes, comprenant en outre :
- un élément réflecteur, en particulier sous forme de feuille réfléchissante (7), disposé sur la zone de surface concave (5) du guide de lumière (2).

9. Luminaire selon l'une quelconque des revendications précédentes, sous forme de luminaire encastré ou de luminaire suspendu.
